# EUROPÄISCHE PATENTSCHRIFT

(11) **EP 2 797 190 B1**
(45) Veröffentlichungstag und Bekanntmachung des Hinweises auf die Patenterteilung: **22.02.2017**
(21) Anmeldenummer: 14000899.6
(22) Anmeldetag: 13.03.2014
(51) Int. Cl.: H02G 3/12, G06F 3/147, H01H 9/18, G09F 9/30, G09G 3/34

(54) **Elektrisches Installationsgerät mit Beschriftungselement und Programmiergerät zur Programmierung eines derartigen Beschriftungselements**
Electric installation device with labelling element and programming device for programming such a labelling element
Appareil d'installation électrique avec signalétique et appareil de programmation pour la programmation d'une telle signalétique

(30) Priorität: 25.04.2013 DE 102013007139
(43) Veröffentlichungstag der Anmeldung: 29.10.2014
(73) Patentinhaber: ABB AG, 68309 Mannheim (DE)
(72) Erfinder: Schallenberg, Wolfgang, 40599 Düsseldorf (DE); Wieske, Stefan, 58285 Gevelsberg (DE); Lehnert, Christian, 58239 Schwerte (DE); Fröhling, Marcel, 58579 Schalksmühle (DE); Krummel, Holger, 58515 Lüdenscheid (DE)

(56) Entgegenhaltungen:
- EP-A1- 2 477 082
- EP-A2- 1 617 397
- DE-B3-102006 024 994
- GB-A- 2 476 688
- US-A1- 2003 173 408
- US-A1- 2012 120 327

## Beschreibung

Die Erfindung betrifft ein elektrisches Installationsgerät mit Beschriftungselement sowie ein Programmiergerät zur Programmierung eines derartigen Beschriftungselements.

Aus der DE 10 2007 008 625 B4 ist ein Unterputz-Installationsgerät zur Informationsdarstellung mit einem Gerätesockel bekannt, welcher über Anschlussklemmen an ein Netz anschließbar ist, wobei ein von einer LED-Ansteuervorrichtung angesteuertes LED-Anzeigeleuchtfeld am Gerätesockel angeschlossen ist, in welchem ein LED-Symbol zur Anzeige gelangt, welches in einem nichtflüchtigen Speicher abgespeichert ist. Das LED-Anzeigefeld befindet sich innerhalb einer als Betätigungswippe dienenden Wippe, welche als schwimmende Wippe ausgebildet ist, deren Kanten als oberer, unterer, linker Betätigungsabschnitt und rechter Betätigungsabschnitt zur Beaufschlagung von vier separaten, am Gerätesockel befestigten Mikrotastern dienen. Mittels einer dem nichtflüchtigen Speicher zugeordneten Verarbeitungseinheit erfolgt eine Auswahl eines bestimmten LED-Symbols aus einer Vielzahl abgespeicherter LED-Symbole.

Aus der DE 10 2007 019 505 A1 ist ein Installationsgerät mit OLED-Leuchtmitteln bekannt, wobei ein steuerbares OLED-Display gleichzeitig als Bedientaste und Anzeigeeinheit fungiert und ein dem OLED-Leuchtmittel zugeordneter Ansteuerbaustein über einen Bus mit einem Basisgerät verbunden ist.

Aus der DE 10 2008 031 767 B4 ist ein elektrisches Unterputz-Installationsgerät bekannt, in welchem ein Geräteeinsatz installiert ist und welcher mindestens ein Beschriftungsfeld aufweist. Die Beleuchtung des Beschriftungsfeldes erfolgt unter Einsatz einer in einem Abdeckrahmen eingebauten Lichtquelle unter Verwendung einer einen Primärkreis und einen Sekundärkreis aufweisenden induktiven Energieübertragungseinrichtung.

EP-A-2477082 offenbart ein elektrisches Unterputz-Installationsgerät nach dem Oberbegriff des Anspruchs 1.

Der Erfindung liegt die Aufgabe zugrunde, ein optimiertes elektrisches Unterputz-Installationsgerät mit Beschriftungselement anzugeben.

Des Weiteren soll ein Programmiergerät zur Programmierung eines derartigen Beschriftungselements angegeben werden.

Diese Aufgabe wird hinsichtlich des Beschriftungselements erfindungsgemäß gelöst durch ein elektrisches Installationsgerät mit Geräteeinsatz, darauf aufzubringender Zentralscheibe und Abdeckrahmen,
- wobei mindestens ein plattenförmig ausgebildetes und zur Darstellung von statischen Informationen, wie Text und Grafik dienendes Beschriftungselement in einer Ausnehmung der Zentralscheibe montiert und aus dieser Ausnehmung entnehmbar ist und
- wobei das Beschriftungselement ein Electronic Paper Display EPD aufweist, welches mit mehreren Kontaktierungspads zur Programmierung der Anzeige versehen ist.

Die mit der Erfindung erzielbaren Vorteile liegen insbesondere darin, dass das Beschriftungselement universell sowohl für mechanische Installationsgeräte ohne eigene Spannungsversorgung als auch in elektronischen Installationsgeräten einsetzbar ist, wobei auch hier eine Spannungskontaktierungs-Notwendigkeit nicht besteht. Das Beschriftungselement ist sowohl für den Nachrüstungs- und Renovierungsmarkt als auch für die Sortimentserweiterung eines existierenden Unterputz- oder Aufputz-Installationsgeräteprogramms bestens geeignet, ohne dass dabei die Notwendigkeit einer Neugestaltung oder Neuentwicklung der Zentralscheibe des Installationsgerätes oder des Abdeckrahmens besteht.

Dabei kann das Beschriftungselement alternativ
- eine einheitliche Schnittstelle zum Electronic Paper Display EPD aufweisen oder
- eine Standard-Schnittstelle aufweisen, welche über eine Steuerlogik / Auswertung / Verarbeitung mit dem Electronic Paper Display EPD verbunden ist.

Die letztgenannte Alternative ermöglicht vorteilhaft eine direkte Programmierung der Anzeige des Beschriftungselements mit Hilfe eines PCs, Smartphones oder Tabletts.

Die Standard-Schnittstelle kann alternativ
- in Form eines USB-Steckers (Universal Serial Bus) oder
- in Form eines FireWire-Steckers oder
- in Form eines I²C-Steckers (Inter-Integrated Circuit) oder
- in Form einer drahtlosen Kommunikationseinrichtung gemäß NFC (Near Field Communication) oder
- in Form einer drahtlosen Kommunikationseinrichtung gemäß Bluetooth ausgebildet sein.

Die Aufgabe wird hinsichtlich des Programmiergeräts erfindungsgemäß gelöst durch ein Programmiergerät zur Programmierung eines Beschriftungselements eines elektrischen Installationsgerätes, wobei das Programmiergerät neben einer Steuerlogik / Auswertung / Verarbeitung über eine zur einheitlichen Schnittstelle des Beschriftungselements korrespondierende einheitliche Schnittstelle verfügt.

In zweckmäßiger Ausgestaltung kann das Programmiergerät in Form eines Programmieradapters ausgebildet sein und zusätzlich über eine externe Schnittstelle verfügen, welche in Form eines USB-Steckers oder FireWire-Steckers oder I²C - Steckers oder in Form einer drahtlosen Kommunikationseinrichtung gemäß NFC oder Bluetooth ausgebildet ist.

Die Erfindung wird nachstehend an Hand der in der Zeichnung dargestellten Ausführungsbeispiele erläutert. Es zeigen:
- Fig. 1: eine perspektivische Sicht auf eine Zentralscheibe eines elektrischen Installationsgerätes,
- Fig. 2: einen Schnitt durch eine Zentralscheibe eines elektrischen Installationsgerätes,
- Fig. 3: eine perspektivische Sicht auf die Vorderseite eines Beschriftungselements,
- Fig. 4: eine perspektivische Sicht auf eine Zentralscheibe eines elektrischen Installationsgerätes mit entnommenem Beschriftungselement,
- Fig. 5: eine perspektivische Sicht auf die Rückseite eines Beschriftungselements,
- Fig. 6: eine schematische Darstellung eines elektrischen Installationsgeräts mit mindestens einem Beschriftungselement erster Ausführungsform,
- Fig. 7: eine schematische Darstellung einer ersten Variante der Programmierung eines Beschriftungselements erster Ausführungsform,
- Fig. 8: eine schematische Darstellung einer zweiten Variante der Programmierung eines Beschriftungselements erster Ausführungsform,
- Fig. 9: eine schematische Darstellung eines elektrischen Installationsgeräts mit mindestens einem Beschriftungselement zweiter Ausführungsform,
- Fig. 10: eine schematische Darstellung einer ersten Variante der Programmierung eines Beschriftungselements zweiter Ausführungsform,
- Fig. 11: eine schematische Darstellung einer zweiten Variante der Programmierung eines Beschriftungselements zweiter Ausführungsform.

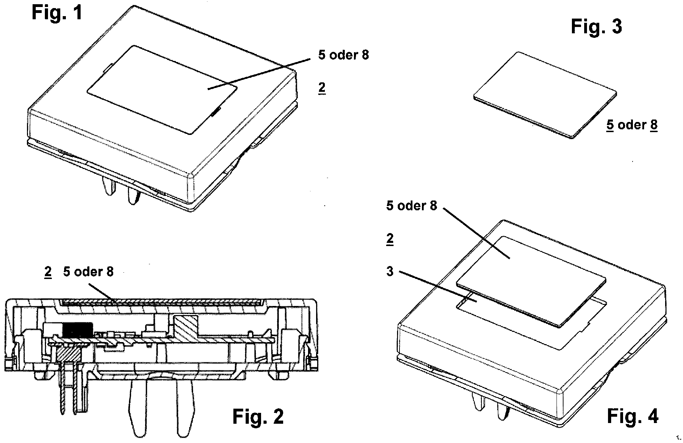

In Fig. 1 ist eine perspektivische Sicht auf eine Zentralscheibe eines elektrischen Installationsgerätes dargestellt. Im Zentrum der Zentralscheibe 2 ist mindestens ein Beschriftungselement 5 erster Ausführungsform oder mindestens ein Beschriftungselement 8 zweiter Ausführungsform angeordnet und befestigt. Die Zentralscheibe 2 wird auf einen Geräteeinsatz, insbesondere auf einen für die Montage in eine handelsübliche UP-Gerätedose geeigneten Gerätesockel eines Unterputz-Installationsgerätes aufgesteckt. Ein Abdeckrahmen komplettiert das betrachtete elektrische Installationsgerät.

In Fig. 2 ist ein Schnitt durch eine Zentralscheibe eines elektrischen Installationsgerätes dargestellt. An der Frontseite der Zentralscheibe 2 befindet sich das Beschriftungselement 5 oder 8. An der Rückseite der Zentralscheibe 2 sind ein Anschlussstecker für die Kontaktierung mit einem entsprechend ausgebildeten Steckkontakt des Gerätesockels und mechanische Befestigungselemente für die Arretierung auf dem Gerätesockel zu erkennen.

In Fig. 3 ist eine perspektivische Sicht auf die Vorderseite eines Beschriftungselements 5 erster Ausführungsform oder eines Beschriftungselements 8 zweiter Ausführungsform dargestellt. Die Beschriftungselemente sind jeweils plattenförmig ausgebildet. Das Beschriftungselement dient zur Darstellung von statischen Informationen, wie Text und Grafik.

In Fig. 4 ist eine perspektivische Sicht auf eine Zentralscheibe eines elektrischen Installationsgerätes mit entnommenem Beschriftungselement dargestellt. Infolge des Abhebens des Beschriftungselements 5 oder 8 von der Zentralscheibe 2 ist eine im Zentrum der Zentralscheibe 2 befindliche Ausnehmung 3 zu erkennen, in welche das Beschriftungselement 5 oder 8 eingeführt, vorzugsweise "eingeklippst" werden kann.

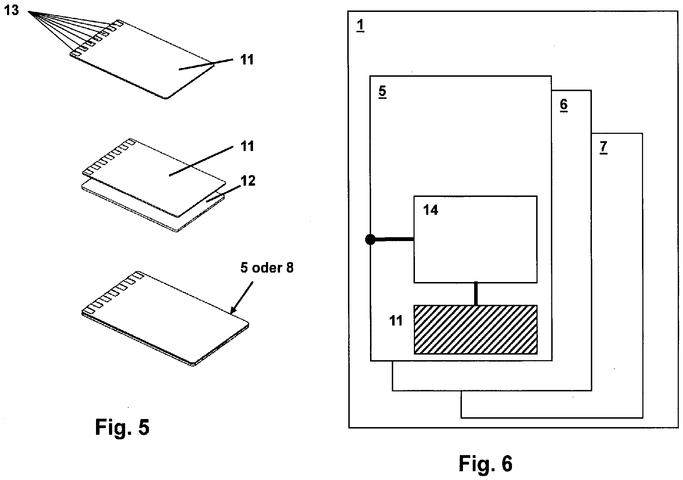

In Fig. 5 ist eine perspektivische Sicht auf die Rückseite eines Beschriftungselements dargestellt, und zwar
- zeigt der obere Bildbereich der Figur 5 ein mit Bezugsziffer 11 gekennzeichnetes "Electronic Paper Display" EPD ("elektronisches Papier", "e-paper"), welches auf seiner Rückseite mit mehreren Kontaktierungspads 13 versehen ist, über welche die Programmierung der Anzeige erfolgen kann,
- zeigt der mittlere Bildbereich der Figur 5 zusätzlich zum EPD 11 ein klarsichtiges Kunststoffteil 12, welches mit dem EPD 11 zu verbinden ist und derart die mechanische Stabilität / Steifigkeit des Beschriftungselements erhöht,
- zeigt der untere Bildbereich der Figur 5 ein fertiggestelltes Beschriftungselement 5 oder 8, gebildet aus dem EPD 11 und dem Kunststoffteil 12, wobei diese beiden Bauteile z. B. miteinander verklebt sind oder das EPD 11 mit dem Kunststoffteil 12 umspritzt ist.

In Fig. 6 ist eine schematische Darstellung eines elektrischen Installationsgeräts mit mindestens einem Beschriftungselement erster Ausführungsform dargestellt. Jedes der skizzierten Beschriftungselemente 5, 6, 7 erster Ausführungsform des elektrischen Installationsgeräts 1 weist eine einheitliche Schnittstelle 14 zum EPD 11 auf, welche beispielsweise in Form der vorstehend erwähnten Kontaktierungspads 13 ausgebildet ist. Unter einer "einheitlichen Schnittstelle 14 zum EPD 11" wird eine mechanisch und elektrisch gleichartig gestaltete Schnittstelle für die Beschriftungselemente verstanden, um derart eine gleichartige Kontaktierungsmöglichkeit für die externe Programmierung zur Verfügung zu stellen. Diese "einheitliche Schnittstelle 14 zum EPD 11" entspricht nicht den bekannten Standard-Schnittstellen, wie z. B. USB (Universal Serial Bus), FireWire, I²C usw. In jedem Fall wird das Beschriftungselement aus dem Installationsgerät entnommen, bevor eine Kontaktverbindung auf dem Beschriftungselement für eine externe Kontaktierung und damit eine Programmierung erfolgt.

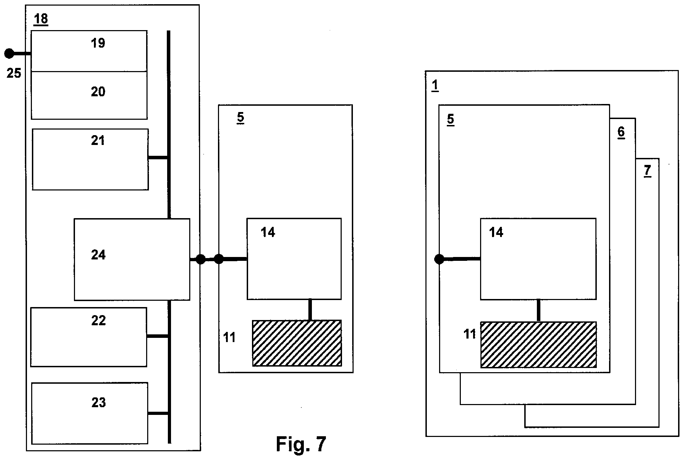

In Fig. 7 ist eine schematische Darstellung einer ersten Variante der Programmierung eines Beschriftungselements erster Ausführungsform dargestellt. Der rechte Bildbereich der Figur zeigt die in Figur 6 bereits dargestellte Anordnung, während der mittlere Bildbereich zusammen mit dem linken Bildbereich zeigt, wie das vom elektrischen Installationsgerät 1 entnommene Beschriftungselement 5 über seine einheitliche Schnittstelle 14 mit einer einheitlichen Schnittstelle 24 eines Programmiergeräts 18 kontaktiert wird, um derart eine Programmierung der Anzeige durchzuführen. Das Programmiergerät 18 kann für seine Energieversorgung entweder eine Batterie 20 aufweisen oder über ein Netzteil 19 mit einer externen Spannungsversorgung 25 verbunden sein. Die erwähnte einheitliche Schnittstelle 24 des Programmiergeräts 18 ist mit einer Steuerlogik / Auswertung / Verarbeitung 21, mit einer Anzeigeeinheit 22 zur Visualisierung von Daten (Text, Grafik) und mit einem Bedienelement 23, wie Taster oder Touchscreen verbunden.

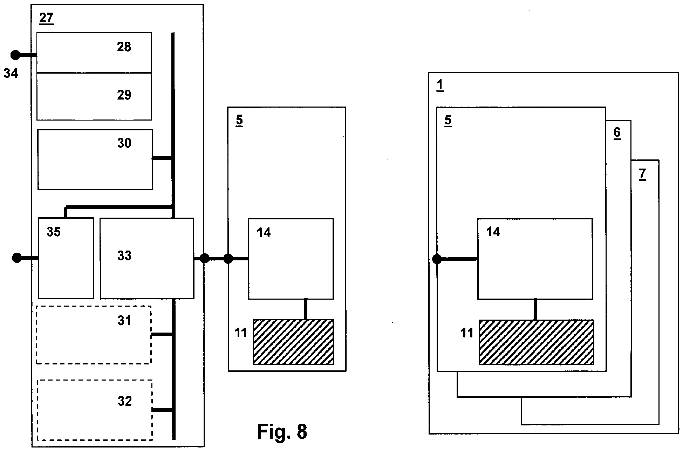

In Fig. 8 ist eine schematische Darstellung einer zweiten Variante der Programmierung eines Beschriftungselements erster Ausführungsform dargestellt. Der rechte und der mittlere Bildbereich der Fig. 8 entsprechen der Ausführung nach Fig. 7. Anstelle des in Fig. 7 gezeigten Programmiergerätes 18 wird jedoch ein in Form eines Programmieradapters ausgebildetes Programmiergerät 27 eingesetzt, welches zusätzlich zu den bereits unter Fig. 7 erwähnten Baukomponenten, wie einheitliche Schnittstelle 33, Netzteil 28 für den Anschluss an eine externe Spannungsversorgung 34, oder Batterie 29, Steuerlogik / Auswertung / Verarbeitung 30, (optional) Anzeigeeinheit 31 und (optional) Bedienelement 32 zusätzlich eine externe Schnittstelle 35 aufweist, beispielsweise in Form eines USB (Universal Serial Bus) -Steckers oder einer drahtlosen Kommunikationseinrichtung gemäß NFC (Near Field Communication) oder gemäß Bluetooth ausgebildet. Bei dieser zweiten Variante kann die Programmierung, d. h. die Eingabe von Beschriftungstext und/oder Grafik, mit Hilfe eines PCs oder Tabletts oder Smartphones erfolgen, wobei das Programmiergerät 27 einerseits die Programmierungs-Informationen über seine externe Schnittstelle 35 empfängt und andererseits über seine einheitliche Schnittstelle 33 an das Beschriftungselement weitergibt.

Bei Ausprägung des Programmiergerätes 27 in Form eines Programmieradapters mit Standard- und herstellerspezifischer Schnittstelle sind Anzeigeeinheit 31 und Bedienelement 32 optionale Komponenten.

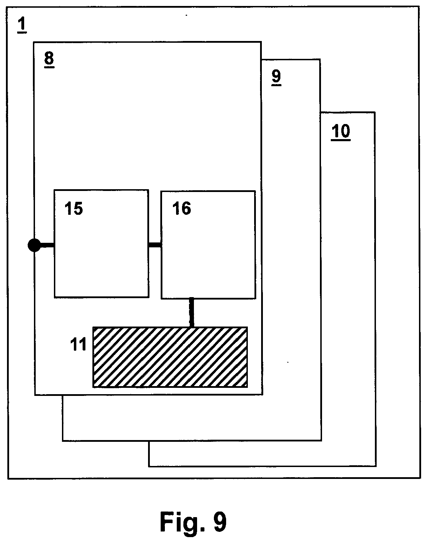

In Fig. 9 ist eine schematische Darstellung eines elektrischen Installationsgeräts mit mindestens einem Beschriftungselement zweiter Ausführungsform dargestellt. Im Unterschied zum Beschriftungselement gemäß Fig. 6 ist die einheitliche Schnittstelle 14 ersetzt durch eine beispielsweise in Form eines USB-Steckers oder FireWire-Steckers oder I²C -Steckers oder einer drahtlosen Kommunikationseinrichtung gemäß NFC oder Bluetooth ausgebildete Standard-Schnittstelle 15, welche über eine Steuerlogik / Auswertung / Verarbeitung 16 mit dem EPD 11 verbunden ist. Die für die Realisierung der Standard-Schnittstelle 15 notwendigen aktiven und passiven Bauteile der Komponenten 15 und 16 sind auf der Rückseite des EPD 11 aufgebracht.

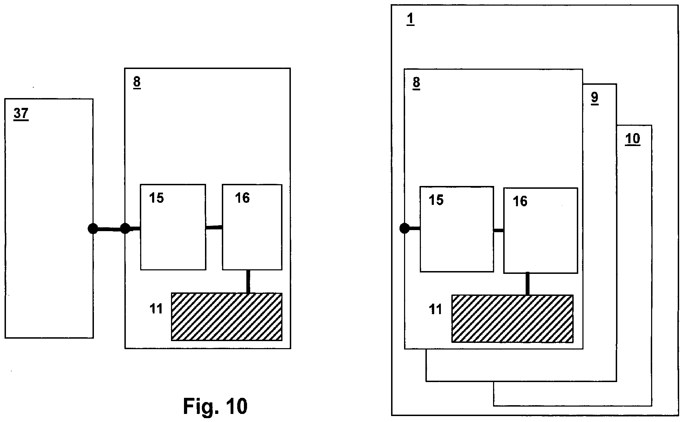

In Fig. 10 ist eine schematische Darstellung einer ersten Variante der Programmierung eines Beschriftungselements zweiter Ausführungsform dargestellt. Der rechte Bildbereich der Figur zeigt die in Figur 9 bereits dargestellte Anordnung, während der mittlere Bildbereich zusammen mit dem linken Bildbereich zeigt, wie das vom elektrischen Installationsgerät 1 entnommene Beschriftungselement 8 über seine Standard-Schnittstelle 15 mit einem Standardgerät 37 zur Programmierung, wie beispielsweise einem PC, einem Tablett oder einem Smartphone verbunden ist, um derart die Programmierung, d. h. die Eingabe von statischen Informationen (Text, Grafik) vorzunehmen.

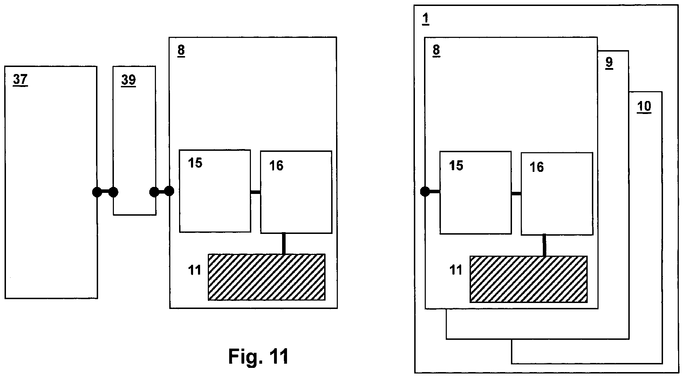

In Fig. 11 ist eine schematische Darstellung einer zweiten Variante der Programmierung eines Beschriftungselements zweiter Ausführungsform dargestellt. Bedingt durch eine reduzierte mechanische Kontaktverbindung auf dem Beschriftungselement selbst kann ein Schnittstellenkonverter notwendig sein, der die mechanische Anpassung an die Standardschnittstelle (z. B. USB) durchführt. Im Unterschied zur ersten Variante gemäß Figur 10 ist zusätzlich ein Schnittstellenkonverter 39 zwischen dem Standardgerät 37 zur Programmierung und dem Beschriftungselement 8 vorgesehen. Bei dieser zweiten Variante kann die Programmierung, d. h. die Eingabe von Beschriftungstext und/oder Grafik, mit Hilfe eines PCs oder Tabletts oder Smartphones erfolgen, wobei der Schnittstellenkonverter 39 die Programmierungs-Informationen über seinen Eingang empfängt und über seinen Ausgang an die Standard-Schnittstelle des Beschriftungselement weitergibt.

### Bezugszeichenliste

- 1: Elektrisches Installationsgerät
- 2: Zentralscheibe
- 3: Ausnehmung
- 4: -

- 5: Beschriftungselement
- 6: Beschriftungselement
- 7: Beschriftungselement
- 8: Beschriftungselement
- 9: Beschriftungselement
- 10: Beschriftungselement
- 11: EPD (Electronic Paper Display, elektronisches Papier, e-paper)
- 12: Kunststoffteil (klarsichtig)
- 13: Kontaktierungspads zur Programmierung der Anzeige
- 14: Einheitliche Schnittstelle zum EPD
- 15: Standard-Schnittstelle zum EPD (z. B. USB)
- 16: Steuerlogik / Auswertung / Verarbeitung
- 17: -
- 18: Programmiergerät
- 19: Netzteil
- 20: Batterie
- 21: Steuerlogik / Auswertung / Verarbeitung
- 22: Anzeigeeinheit
- 23: Bedienelement
- 24: Einheitliche Schnittstelle
- 25: Externe Spannungsversorgung
- 26: -
- 27: Programmiergerät in Form eines Programmieradapters
- 28: Netzteil
- 29: Batterie
- 30: Steuerlogik / Auswertung / Verarbeitung
- 31: Anzeigeeinheit
- 32: Bedienelement
- 33: Einheitliche Schnittstelle
- 34: Externe Spannungsversorgung
- 35: Externe Schnittstelle (z. B. USB)
- 36: -
- 37: Standardgerät zur Programmierung (PC, Tablett, Smartphone)
- 38: -
- 39: Schnittstellenkonverter

## Patentansprüche

1. Elektrisches Unterputz-Installationsgerät (1) mit Geräteeinsatz, darauf aufzubringender Zentralscheibe (2) und Abdeckrahmen,
• wobei mindestens ein plattenförmig ausgebildetes und zur Darstellung von statischen Informationen, wie Text und Grafik dienendes Beschriftungselement (5, 6, 7, 8, 9, 10) in einer Ausnehmung (3) der Zentralscheibe (2) montiert ist **dadurch gekennzeichnet, dass** das Beschriftungselement aus dieser Ausnehmung entnehmbar ist
• wobei das Beschriftungselement (5, 6, 7, 8, 9, 10) ein Electronic Paper Display EPD (11) aufweist, welches mit mehreren Kontaktierungspads (13) zur Programmierung der Anzeige versehen ist.

2. Elektrisches Unterputz-Installationsgerät (1) nach Anspruch 1, **dadurch gekennzeichnet, dass** das Beschriftungselement (5, 6, 7) eine einheitliche Schnittstelle (14) zum Electronic Paper Display EPD (11) aufweist.

3. Elektrisches Unterputz-Installationsgerät (1) nach Anspruch 1, **dadurch gekennzeichnet, dass** das Beschriftungselement (8, 9, 10) eine Standard-Schnittstelle (15) aufweist, welche über eine Steuerlogik / Auswertung / Verarbeitung (16) mit dem Electronic Paper Display EPD (11) verbunden ist.

4. Elektrisches Unterputz-Installationsgerät (1) nach Anspruch 3, **dadurch gekennzeichnet, dass** die Standard-Schnittstelle (15) in Form eines USB-Steckers ausgebildet ist.

5. Elektrisches Unterputz-Installationsgerät (1) nach Anspruch 3, **dadurch gekennzeichnet, dass** die Standard-Schnittstelle (15) in Form eines FireWire-Steckers ausgebildet ist.

6. Elektrisches Unterputz-Installationsgerät (1) nach Anspruch 3, **dadurch gekennzeichnet, dass** die Standard-Schnittstelle (15) in Form eines I²C -Steckers ausgebildet ist.

7. Elektrisches Unterputz-Installationsgerät (1) nach Anspruch 3, **dadurch gekennzeichnet, dass** die Standard-Schnittstelle (15) in Form einer drahtlosen Kommunikationseinrichtung gemäß NFC ausgebildet ist.

8. Elektrisches Unterputz-Installationsgerät (1) nach Anspruch 3, **dadurch gekennzeichnet, dass** die Standard-Schnittstelle (15) in Form einer drahtlosen Kommunikationseinrichtung gemäß Bluetooth ausgebildet ist.

9. Programmiergerät (18, 27) zur Programmierung eines Beschriftungselements (5, 6, 7, 8, 9,10) eines elektrischen Installationsgerätes (1) nach mindestens einem der vorstehenden Ansprüche 1 - 9, **dadurch gekennzeichnet, dass** es neben einer Steuerlogik / Auswertung / Verarbeitung (21) über eine zur einheitlichen Schnittstelle (14) des Beschriftungselements (5, 6, 7, 8, 9,10) korrespondierende einheitliche Schnittstelle (24) verfügt.

10. Programmiergerät (27) nach Anspruch 10, **dadurch gekennzeichnet, dass** es in Form eines Programmieradapters ausgebildet ist und zusätzlich über eine externe Schnittstelle (35) verfügt, welche in Form eines USB-Steckers oder FireWire-Steckers oder I²C -Steckers oder in Form einer drahtlosen Kommunikationseinrichtung gemäß NFC oder Bluetooth ausgebildet ist.

## Claims

1. Electrical flush-mounted installation device (1) having a device insert, a central plate (2) to be applied thereto and a covering frame,
• at least one labelling element (5, 6, 7, 8, 9, 10) which is in the form of a plate and is used to present static information such as text and graphics being mounted in a recess (3) in the central plate (2), **characterized in that** the labelling element can be removed from this recess,
• the labelling element (5, 6, 7, 8, 9, 10) having an electronic paper display EPD (11) which is provided with a plurality of contact-making pads (13) for programming the display.

2. Electrical flush-mounted installation device (1) according to Claim 1, **characterized in that** the labelling element (5, 6, 7) has a standard interface (14) to the electronic paper display EPD (11).

3. Electrical flush-mounted installation device (1) according to Claim 1, **characterized in that** the labelling element (8, 9, 10) has a standard interface (15) which is connected to the electronic paper display EPD (11) via control logic/evaluation/processing (16).

4. Electrical flush-mounted installation device (1) according to Claim 3, **characterized in that** the standard interface (15) is in the form of a USB connector.

5. Electrical flush-mounted installation device (1) according to Claim 3, **characterized in that** the standard interface (15) is in the form of a FireWire connector.

6. Electrical flush-mounted installation device (1) according to Claim 3, **characterized in that** the standard interface (15) is in the form of an I²C connector.

7. Electrical flush-mounted installation device (1) according to Claim 3, **characterized in that** the standard interface (15) is in the form of a wireless communication device according to NFC.

8. Electrical flush-mounted installation device (1) according to Claim 3, **characterized in that** the standard interface (15) is in the form of a wireless communication device according to Bluetooth.

9. Programming device (18, 27) for programming a labelling element (5, 6, 7, 8, 9, 10) of an electrical installation device (1) according to at least one of the preceding Claims 1-9, **characterized in that**, in addition to control logic/evaluation/processing (21), it has a standard interface (24) corresponding to the standard interface (14) of the labelling element (5, 6, 7, 8, 9, 10) .

10. Programming device (27) according to Claim 10, **characterized in that** it is in the form of a programming adapter and additionally has an external interface (35) which is in the form of a USB connector or a FireWire connector or an I²C connector or in the form of a wireless communication device according to NFC or Bluetooth.

## Revendications

1. Appareil d'installation électrique encastré (1) comportant un insert d'appareil, des plaques centrales (2) pouvant être montées sur celui-ci et des cadres de recouvrement,
- dans lequel au moins un élément d'inscription (5, 6, 7, 8, 9, 10) réalisé en forme de plaque et utilisé pour représenter des informations statiques telles que du texte ou des graphiques est monté dans un réceptacle (3) de la plaque centrale (2), **caractérisé en ce que** l'élément d'inscription peut être sorti dudit réceptacle,
- dans lequel au moins un élément d'inscription (5, 6, 7, 8, 9, 10) comporte un afficheur à papier électronique EPD (Electronic Paper Display) (11) muni de plusieurs plages de contact (13) destinées à programmer l'afficheur.

2. Appareil d'installation électrique encastré (1) selon la revendication 1, **caractérisé en ce que** l'élément d'inscription (5, 6, 7) comporte une interface unitaire (14) avec l'afficheur à papier électronique EPD (11).

3. Appareil d'installation électrique encastré (1) selon la revendication 1, **caractérisé en ce que** l'élément d'inscription (8, 9, 10) comporte une interface standard (15) qui est connectée par l'intermédiaire d'un système logique de commande/d'évaluation/de traitement (16) à l'afficheur à papier électronique EPD (11).

4. Appareil d'installation électrique encastré (1) selon la revendication 3, **caractérisé en ce que** l'interface standard (15) est réalisée sous la forme d'un connecteur USB.

5. Appareil d'installation électrique encastré (1) selon la revendication 3, **caractérisé en ce que** l'interface standard (15) est réalisée sous la forme d'un connecteur FireWire.

6. Appareil d'installation électrique encastré (1) selon la revendication 3, **caractérisé en ce que** l'interface standard (15) est réalisée sous la forme d'un connecteur I²C.

7. Appareil d'installation électrique encastré (1) selon la revendication 3, **caractérisé en ce que** l'interface standard (15) est réalisée sous la forme d'un dispositif de communication sans fil de type NFC.

8. Appareil d'installation électrique encastré (1) selon la revendication 3, **caractérisé en ce que** l'interface standard (15) est réalisée sous la forme d'un dispositif de communication sans fil de type Bluetooth.

9. Appareil de programmation (18, 27) destiné à programmer un élément d'inscription (5, 6, 7, 8, 9, 10) d'un appareil d'installation électrique (1) selon au moins l'une des revendications 1-9 précédentes, **caractérisé en ce qu'**outre un système logique de commande/d'évaluation/de traitement (21), il dispose d'une interface unitaire (24) correspondant à l'interface unitaire (14) de l'élément d'inscription (5, 6, 7, 8, 9, 10).

10. Appareil de programmation (27) selon la revendication 10, **caractérisé en ce qu'**il est réalisé sous la forme d'un adaptateur de programmation et **en ce qu'**il dispose en outre d'une interface externe (35) qui est réalisée sous la forme d'un connecteur USB ou d'un connecteur FireWire ou d'un connecteur I²C ou sous la forme d'un dispositif de communication sans fil de type NFC ou Bluetooth.
